# EUROPEAN PATENT SPECIFICATION

(11) **EP 3 256 538 B1**
(45) Date of publication and mention of the grant of the patent: **09.06.2021**
(21) Application number: 15787061.9
(22) Date of filing: 01.10.2015
(51) Int. Cl.: C09J 7/00, C08J 5/18, B32B 27/00

(54) **STRUCTURAL HANDLING FILM**
STRUKTURMANIPULATIONSFOLIE
FILM DE MANIPULATION STRUCTURAL

(30) Priority: 09.02.2015 US 201562113728 P
(43) Date of publication of application: 20.12.2017
(73) Proprietor: Zephyros Inc., Romeo, MI 48065 (US)
(72) Inventor: CHMIELEWSKI, Craig, Shelby Township, MI 48315 (US); MADAUS, Brandon, Richmond, MI 48062 (US); DOMBROWSKI, Dawn, Almont, MI 48003 (US)
(74) Representative: Kutzenberger Wolff & Partner
(86) International application number: PCT/US2015/053394
(87) International publication number: WO 2016/130180

(56) References cited:
- WO-A2-2011/141148
- US-A1- 2008 060 742
- US-B1- 6 455 116

## Description

### FIELD

The present invention relates to a structural handling film that is applied to tacky adhesive and sealant products.

### BACKGROUND

For many years, industry has been concerned with designing and providing adhesive materials for providing baffling, sealing, noise/vibration reduction, reinforcement, structural attachment or the like to articles of manufacture such as automotive vehicles. In certain instances, it can be desirable to apply these adhesive materials as pre-formed parts or masses such as strips, tapes or the like. Tacky adhesives provide an economical way of joining two surfaces because such tapes are typically formed into useful articles through an extrusion process, which is a simple and easily customizable manufacturing method (as opposed to the high costs and molds associated with molding processes). Additionally, the tacky nature of such adhesives is such that they can be easily and quickly adhered to a wide variety of surfaces, locations, and shapes. However, the tackiness can also undesirably adhere to persons, clothing, machines or other objects prior to or during application of the adhesive materials to an article of manufacture. Therefore, there is a need for a technology that will allow simplified use and handling of tacky adhesives, for example with a handling film. While handling films are known in the art, most are not suited for adhesive/film recycling. This adds to the cost of the adhesive and often complicates storage and transportation of the handling film.

Thus, the present invention provides a handling film that adheres to an adhesive and is thin enough so that the handling film overcomes one or more of the aforementioned drawbacks or other drawbacks. The film may further have the same adhesive characteristics as the adhesive upon which the film is located, but is dry to the touch.

### SUMMARY

The present invention seeks to provide a technology improving handling of tacky adhesives, and particularly teaching a release paper on one side of a tacky adhesive article and a handling film on the opposite side of the tacky adhesive article which allows easy handling of the tacky adhesive article. Typically, a handling layer is applied to an adhesive material to form a composite adhesive article. Moreover, it is preferable for the handling layer to assist the adhesive material in maintaining dimensional stability.

The present teachings provide for a handling film comprising a polyhydroxyamino ether thermoplastic, a monofunctional epoxy and a carboxylated nitrile butadiene elastomer. The monofunctional epoxy may react with an amine of the polyhydroxyamino ether thermoplastic substantially limiting reaction between the carboxylated nitrile butadiene elastomer and polyhydroxyamino ether thermoplastic. The handling film may also include a nitrile butadiene rubber elastomer with a high bound acrylonitrile content, an ethylene methyl acrylate copolymer, a solid epoxy resin, and one or more fillers.

The handling film may be located in contact with a tacky structural adhesive. The adhesive may be an adhesive extrudate. The handling film may be extruded to a target thickness, rolled on a core, stored, and applied to the adhesive after an extensive period of time. the handling film may bond the adhesive to a substrate coated with a nonpolar substance. The nonpolar substance may be oil. The carboxylated nitrile butadiene elastomer may absorb the oil to facilitate bonding. The handling film may bond the adhesive to a substrate coated with oil at 250°F. A thickness of the handling film may be 8 microns or less. A thickness of the handling film may be about 25 microns or less. The film may have a thickness of about 25 microns or less which enables recycling of the offal of die cut parts made from a composite adhesive article so that the handling film can be blended with an adhesive and re-extruded. The handling film may be extruded separately from the adhesive. The handling film is easy to pull apart, does not change physical properties, is free of cracks and rips, and is easy to apply to an adhesive extrudate after being stored for an extended period of time.

In another aspect, the present invention contemplates a method for production of the handling film and the tacky adhesive the handling film is applied to. The method may include one or more of the following steps: mixing one or more ingredients of the handling film in a batch-type process to form a substantially homogeneous mixture; feeding the substantially homogeneous mixture as a solid, semi-solid, or liquid to the extruder; extruding a layer of the handling film; stretching the handling film to produce a thin layer and achieve a desired thickness; rolling the handling film onto a core; optionally storing the handling film on the core; unrolling the handling film from the core; applying the handling film to an adhesive; and activating the handling film, the adhesive, or both.

The present teachings further provide for a composite adhesive article comprising an adhesive, and a handling film comprising: a polyhydroxyamino ether thermoplastic, a monofunctional epoxy, an ethylene methyl acrylate copolymer; solid epoxy resin; a carboxylated nitrile butadiene elastomer; a nitrile butadiene rubber elastomer with a high bound acrylonitrile content, and a filler. The handling film may comprise: from 65% to 75% wt polyhydroxyamino ether thermoplastic, from 5% to 15% wt epoxidized cashew nut shell liquid, from 1% to 10% wt ethylene methyl acrylate copolymer, from 5% to 15% wt solid epoxy resin, from 1% to 10% wt carboxylated nitrile butadiene elastomer, from 1% to 5% wt nitrile butadiene rubber elastomer with a high bound acrylonitrile content, and from 0.5% to 3% wt precipitated silica.

It should be appreciated that the above referenced aspects and examples are non-limiting as others exist with the present teachings, as shown and described herein. For example, any of the above mentioned aspects or features of the teachings may be combined to form other unique configurations, as described herein, demonstrated in the drawings, or otherwise.

### BRIEF DESCRIPTION OF THE DRAWINGS

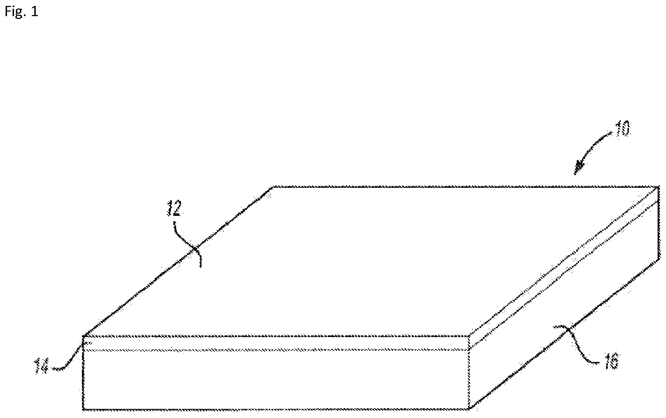

FIG. 1 illustrates an example of a composite adhesive article formed in accordance with the present teachings.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled.

The present teachings provide a handling film formulated to be used in conjunction with an adhesive, especially a tacky adhesive, to form a composite adhesive article. The handling film enables easy manipulation with, use, and application of a tacky adhesive. The adhesive may include one or more polymers. The one or more polymers may include epoxy resin, urethane, phenoxy resin, acrylate, acetate, ethylene polymer, elastomer, the like, or a combination thereof. Preferably, the adhesive is a structural tacky adhesive. A structural adhesive is any adhesive that has structural mechanical properties (i.e. high modulus and strength) when fully cured. The adhesive may be activatable. An activatable adhesive is any adhesive that softens, melts, flows, wets, cures (e.g., thermoset and/or harden), expands (e.g., foam) or any combination thereof due to chemical reaction, exposure to an ambient condition or external stimulus (e.g., heat, radiation, moisture), the like, or a combination thereof. Preferably, the adhesive activates in a reliable and predictable manner upon application of heat or occurrence of a particular ambient condition. If the adhesive is thermally-activatable, it can be initially processed as a flowable material before curing, and upon curing, the material will typically cross-link making the material incapable of further flow. The adhesive material may expand (e.g., foam) to at least about 10%, at least about 20%, at least about 50%, at least about 100%, at least about 200%, at least about 1000%, or at least about 2000% its original or unexpanded volume. A structural adhesive may expand to a volume that is about 20% to about 75% of the volume of the material prior to expansion. Higher or lower expansion levels are also contemplated. In applications where the adhesive material is a heat activated material, an important consideration involved with the selection and formulation of the material is the temperature at which a material cures and, if expandable, the temperature of expansion. Typically, the material becomes reactive (cures, expands or both) at higher processing temperatures, such as those encountered in an automobile assembly plant, when the material is processed along with the automobile components at elevated temperatures or at higher applied energy levels, e.g., during paint curing and/or e-coat steps. While temperatures encountered in an automobile assembly operation may be in the range of about 150°C to 205°C (about 300°F to 400°F), body and paint shop applications are commonly about 94° C (about 200°F) or slightly higher.

The adhesive material or the handling layer can also include additional polymeric materials which can include a variety of different polymers, such as thermoplastics, elastomers, plastomers combinations thereof or the like. For example, and without limitation, polymers that might be appropriately incorporated into the adhesive material or the handling film include, without limitation, halogenated polymers, polycarbonates, polyketones, urethanes, phenoxy resin (e.g., thermoplastic polyethers), polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) or mixtures thereof. Other potential polymeric materials may be or may include, without limitation, polyolefin (e.g., polyethylene, polypropylene) polystyrene, polyacrylate, poly(ethylene oxide), poly(ethyleneimine), polyester, polyurethane, polysiloxane, polyether, polyphosphazine, polyamide, polyimide, polyisobutylene, polyacrylonitrile, poly(vinyl chloride), poly(methyl methacrylate), poly(vinyl acetate), poly(vinylidene chloride), polytetrafluoroethylene, polyisoprene, polyacrylamide, polyacrylic acid, polymethacrylate.

Preferred thermoplastic polymers for the handling film, the adhesive material or both such as polyamide, ethylene vinyl acetate, ethylene methacrylate, polyvinyl chloride, poly(hydroxy amino ether) (PHAE) thermoplastic, polyethylene or polypropylene and/or copolymers including such thermoplastic polymers will typically exhibit one or both of the following properties: glass transition temperature (T_{g}) between about 50°C and about 150°C and more typically between about 70°C and about 120°C; and a solubility parameter of between about 15 and about 32 J^{1/2}/cm^{3/2} and more typically between about 18 and 26 J^{1/2}/cm^{3/2}. Such solubility parameter can be an indication of the miscibility of the thermoplastic polymer in an epoxy resin (e.g., a solid epoxy resin).

The thickness of the adhesive may vary. The nominal thickness of the adhesive may be about 500 microns or more, 1000 microns or more, 1500 microns or more, 2000 microns or more. Specific examples of adhesives of the present teachings may be L-5001E, L-5570, L-8100, available from L&L Products (Romeo, Michigan). Examples of suitable materials for the adhesive material are disclosed in U.S. Pat. Nos. 6,846,559; 6,811,864 and U.S. Patent Publication 2004/0221953, all of which are incorporated herein by reference for all purposes.

The handling film may have structural mechanical properties. The handling film may be dry-to-the-touch. The handling film meets specifications of each application such as appropriate bake temperatures, bond adhesive to a variety of substrate types, bond adhesive to substrates with oily surface, have sufficient bonding strength, pass failure mode test, the like, or a combination thereof. The handling film may be applied on top of extruded tacky adhesive while being extruded at the same time as the adhesive.

The handling film may bond tacky adhesive to a variety of substrates. The handling film adheres and bonds to both the adhesive and the adhesive's mating substrate. The handling film may bond tacky adhesive to a variety of substrates coated with a different substance. The different substance may be polar or non-polar. The different substance may be oil. The handling film may bond tacky adhesive to a variety of substrates over a wide range of bake temperatures. The range of temperatures may be 250°F or more, 300°F or more, 350°F or more, 400°F or or more ((°F - 32) × 5/9 = °C). The handling film may provide structural bonding performance with no significant degradation of the structural property performance of the tacky adhesive.

The handling film may have a different thickness. The nominal thickness of the handling film may be 10% or less, 8% or less, 5% or less, 3% or less, 2% or less, 1% or less, 0.5% or less, 0.25% or less of the total thickness of the composite adhesive article. A low film thickness (less than 10% of the total thickness of the composite adhesive article) may enable recycling of the offal of die cut parts made from the adhesive composite so that the handling film can be blended with the adhesive and re-extruded. The nominal thickness of the handling may be 200 microns or less, 100 microns or less, 50 microns or less, 25 microns or less, 10 microns or less, 8 microns or less. Preferably, the nominal thickness of the handling film is 25 microns. Regardless of the thickness of the handling film, it is typically desirable for the film to have a percent elongation prior to failure of less than about 200%, although possibly higher, more typically less than about 100% and still more typically less than about 50% or 30%.

The handling film may be produced simultaneously with the adhesive or separately from the adhesive. The handling film may be extruded together with the adhesive. The handling film may be extruded separately from the adhesive. The handling film may be stored, handled, used, transported, or a combination thereof with or without the adhesive. The handling film may be rolled onto a core (spool). The handling film may be rolled onto a core (spool) independent of the adhesive extrusion process. The handling film may be stored on the core so that it may be transported to customers around the world and/or stored for an extended period of time. The extended period of time may be one day or longer, one week or longer, one month or longer, or even one year or longer. Preferably, the handling film is easy to pull apart after being stored for an extended period of time. The handling film may not change physical properties after being stored for extended period of time, for example, the film does not become brittle, is free of cracks, rips, the like, or a combination thereof. The handling film may be easy to apply to an extruded adhesive after being stored.

The parts formed by the present invention can be applied to members or substrates of components of various articles of manufacture such as vehicles, boats, trains, buildings, appliances, homes, furniture or the like. The parts are particularly suitable for application to members of automotive vehicles or other transportation vehicles. The parts may be applied to various members such as members that are part of a body, a pillar, a roof, an underbody, a frame, an engine, a hood, a trunk, a bumper, the like, or a combination thereof of an automotive vehicle. The adhesive material may be applied for purposes such as adhesion, vibration damping, baffling, sealing, reinforcement, structural bonding, the like, or a combination thereof. The parts may be applied to a carrier for forming a reinforcement, a baffle, a seal, the like, or a combination thereof and then applied to an article of manufacture such as an automotive vehicle.

The structural handling film may be a melt blend of one or more ingredients. The structural film may comprise among other ingredients:
1) polyhydroxyamino ether (PHAE) thermoplastic,
2) monofunctional epoxy (which may be epoxidized cashew nut shell liquid),
3) a carboxylated nitrile butadiene (NBR) elastomer.

The handling film may also include one or more of the following:
1) ethylene methyl acrylate (EMA) copolymer,
2) solid epoxy resin,
3) an nitrile butadiene rubber (NBR) elastomer with a high bound acrylonitrile content, and
4) a filler (e.g., precipitated silica).

The weight percentage of individual ingredients of the handling film may vary. Preferably, the handling film comprises the ingredients in the following manner: about 65-75% wt polyhydroxyamino ether thermoplastic; about 1-15% wt monofunctional epoxy; about 1-15% wt ethylene methyl acrylate copolymer; about 1-15% wt solid epoxy resin; about 1-15% wt a carboxylated nitrile butadiene elastomer; about 1-10% wt an nitrile butadiene rubber elastomer with a high bound acrylonitrile content; and about 0.1-5% wt precipitated silica.

A polyamino ether, or polyetheramine, is an epoxy-based polar thermoplastic with exceptional gas barrier properties. PHAE is also known as thermoplastic epoxy resin (TPER) and is illustrated in U.S. Pat. Nos. 5,164,472; 5,275,853; 5,401,814 5,464,924, and 7,879,925, PHAE generally has a relatively high flexural strength and modulus-often much higher than typical polyolefins (i.e. polyethylene and polypropylene)-and has the added benefit of being melt processable at temperatures of 150 to 200° C. PHAE is used as a matrix material in combination with other polymeric materials. PHAE is preferably included in the present handling film in an amount between about 50 and 80% by weight of the total composition, more preferably about 65%-75% and even more preferably about 72%. The preferred polyamino ether used in these teachings is L-TE01-15.

The film may include a monofunctional epoxy. The monofunctional epoxy is included to react with the amine of the polyetheramine, thereby minimizing reaction of the polyetheramine with other components of the film. An epoxidized cashew nutshell liquid may be utilized as the monofunctional epoxy. The cashew nutshell liquid is formed by the epoxidation of cashew nutshell liquid with organic compounds containing a three-membered oxide ring known as epoxy, oxirane, or ethoxyline group. Cashew nutshell liquid (CNSL) is a natural, non-food chain, annually renewable biomaterial. The cashew nutshell liquid contains mainly anacardic acid and a smaller amount of cardol and its methyl derivatives. CNSL can be decarboxylated and distilled to yield high purity cardanol, a highly desirable alkylphenolic compound. Cardanol is a naturally occurring metasubstituted alkenyl phenol similar to nonylphenol. Cardanol is hydrophobic in nature and remains flexible and liquid at very low temperatures. Cardanol is a natural alkylphenolic material with an aromatic ring that provides a strong chemical resistant backbone while the hydroxyl group gives strong adhesion and good reactivity for fast and low temperature cure. A long aliphatic side chain provides excellent water resistance, good flexibility, low viscosity, extended pot life, and excellent corrosion protection. Compounds which can be used for the epoxidation reaction are ethylene oxide or substantial ethylene oxides such as propylene oxide, phenyl glycidyl ether, glycidyl chloride (epichlorohydrin), vinyl-cyclohex-3-ene dioxide, the like, or a combination thereof. Epichlorohydrin is preferred due to ease of processability and high availability. Epichlorohydrin is reacted in an excess of about 10 molar times the amount of cashew nutshell liquid. The reaction is carried out in an alkaline medium, and the excess epichlorohydrin can be distilled off after the reaction. The epoxidized cashew nutshell liquid has an equivalent weight of around 250 to 450 g/equivalent, or one reactive epoxide group per 250-450 g of the epoxidized cashew nutshell liquid. CNSL can be used as a resin modifier, as a phenolic compound shown above, or it can be epoxidized through the phenolic group to make an epoxy resin to be used in an epoxy mixture. Epoxidized cashew nutshell liquid is preferably included in the present handling film in an amount between about 5 and 25% by weight of the total composition, more preferably about 8%. The preferred CNSL used in these teachings is Cardolite LITE 2513HP manufactured by Cardolite Corporation (Newark, NJ).

Ethylene methyl acrylate (EMA) copolymer is a copolymer intended for extrusion coating, coextrusion coating, and extrusion lamination in applications requiring good interlayer adhesion between polyethylene, polypropylene, nylon, PVDC (polyvinyldiene chloride), or other substances. EMA may offer very good balance of adhesion onto a variety of substrates and interlayer adhesion. EMA may have very good heat seal properties. EMA may contain about 10% wt or more, 20% or more, 30% or more methyl acrylate or more. Preferably, EMA contains 21.5% wt methyl acrylate. EMA may have a peak melting temperature of 70°F or more, 80°F or more, 90°F or more, 100°F or more, 120°F or more, 140°F or more. EMA may have a peak melting temperature of 200°F or less, 180°F or less, 160° or less ((°F - 32) × 5/9 = °C). The handling film of the teachings herein may contain at least 2% or more of EMA, at least 5% or more of EMA, at least 10% or more of EMA. Preferably, the handling film contains at least 5% wt EMA. EMA used in the teachings herein may be OPTEMA EMA TC 120, from ExxonMobil (Irving, TX).

Solid epoxy resin is any conventional dimeric, oligomeric or polymeric epoxy materials containing at least one epoxy functional group. The epoxy resin may be included in the film as an adhesion promoter. The epoxy resin may be any epoxy containing material having one or more oxirane rings polymerizable by a ring opening reaction. The epoxy may be aliphatic, cycloaliphatic, aromatic or the like. The epoxy may include an ethylene copolymer or terpolymer that may possess an alpha-olefin. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may or may not be modified with, for example, a polymeric additive. The epoxy resin may be supplied as one or more solid resins (e.g., epoxy resin that is solid at 23° C). The epoxy resin can be supplied as pellets, pieces, chunks, the like, or a combination thereof. The solid epoxy adds a low molecular weight species to help with bonding as well as helps to lower the overall melt flow of the product. The solid epoxy may be included in the present handling film in an amount between about 5 and 25% by weight of the total composition, preferably about 8% (e.g., 8.18%). The epoxy resin may have high functionality to provide improved lap shear strength, high temperature performance, good chemical resistance, low viscosity, the like, or a combination thereof. The epoxy resin may comprise one or more epoxy resins. It is also generally preferable for a substantial portion of the epoxy resin to be comprised of one or more solid epoxy resins. Examples of suitable epoxy resins, without limitation, are sold under the trade designations DER® 661, 662, 664 or 331 and are commercially available from Dow Chemical Company (Midland, MI) and under the trade designation ARALDITE GT 7071, GT 7072, GT 7074 or 1280 ECN commercially available from Huntsman (Salt Lake City, UT). Preferably, the epoxy resin used is DER® 661.

A carboxylated nitrile butadiene elastomer is a copolymer of butadiene and acrylonitrile of medium-high acrylonitrile content modified to contain carboxyl groups. This improved version of NBR contains carboxyl groups R-COO- on the double bond of the butadiene part. These groups will make ionic cross links to give improved physical properties, such as resistance to oil, fuel, and other chemicals, as compared to a non-carboxylated NBR. However, in order to absorb the oil as desired, it is necessary to avoid reacting the carboxylated NBR with the polyetheramine. These chemically active groups are also capable of forming strong covalent bonds when in the presence of certain other chemical groups such as primary and secondary amines. The carboxyl groups which are needed for these extra links are distributed randomly and are present at levels of 10% or less. An example of a carboxylated NBR used in these teachings may be Nipol 1472X in the form of nominal 1/4" three-dimensional chips containing approximately 5% mineral dusting agent to prevent agglomeration (available from ZEON Chemicals (Louisville, KY). The carboxylated NBR may be included in the present handling film in an amount between about 2 and 15% by weight of the total composition, preferably about 2% (e.g., 2.64%) by weight of the total composition.

A nitrile butadiene rubber elastomer with a high-bound acrylonitrile content is a copolymer of butadiene and acrylonitrile. The high content of acrylonitrile may improve desirable properties such as oil/fuel resistance, compatibility with polar polymers, air/gas impermeability, tensile strength, abrasion resistance, heat-aging, the like, or a combination thereof. The amount of acrylonitrile may be 15% or more, 20% or more, 30% or more, 40% or more, or 50% or more. A NBR elastomer used may feature among other properties low mold fouling, fast curing, easy processing, good balance of low-temperature flex, solvent resistance, or a combination thereof. An example of a NBR elastomer with a high bound acrylonitrile used in these teachings may be Nipol DN3335 (available from Zeon Chemicals (Louisville, KY). The NBR with a high-bound acrylonitrile content may be used in the present handling film in an amount between about 2 and 15% by weight of the total composition, preferably about 3% (e.g., 3.52%) by weight of the total composition.

The handling layer may also include one or more fillers, including but not limited to particulate materials (e.g., powder), beads, microspheres, or the like to achieve better properties. Preferably the filler includes a relatively low-density material that is generally non-reactive with the other components present in the handling layer. Examples of fillers include silica, calcium carbonate, diatomaceous earth, glass, clay, talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, wollastonite, pyrophyllite, sauconite, saponite, nontronite, montmorillonite or mixtures thereof. The clays may also include minor amounts of other ingredients such as carbonates, feldspars, micas and quartz. Titanium dioxide might also be employed. One or more mineral or stone type fillers such as calcium carbonate, sodium carbonate or the like may be used as fillers. In another preferred embodiment, silicate minerals such as mica may be used as fillers. A preferred example of a filler used in the teachings herein is Zeothix 265 precipitated silica (available from Huber Engineered Materials (Atlanta, GA). The one or more fillers in the handling film can range from 0.1% to 10% by weight of the handling film material. Preferably, a filler may be used in the present handling film in an amount between about 0.1 and 20% by weight of the total composition, preferably about 1% (e.g., 0.66%) by weight of the total composition.

Formation of the handling film may be accomplished according to a variety of methods and techniques. The one or more ingredients of the handling film may be mixed in a batch type process to form a substantially homogeneous mixture. For example, the ingredients may be dispensed to a mixer (e.g., a high shear mixer) and mixed until the material of the handling film is formed in a substantially homogeneous state. Preferably, the mixing takes place at a temperature between about 50°C and 250°C, more preferably between about 70°C and about 200°C, and even more preferably between about 80°C and about 160°C, and even possibly between about 90°C and about 120°C. Thereafter, the material of the handling film can be allowed to cool and typically solidify although it may cool and remain as a semi-solid or a liquid, unless otherwise stated. The solidified material may form pellets, chips, pieces, the like, or a combination thereof which are later extruded.

The handling film may be formed using a continuous mixing process such as by mixing the ingredients of the handling film in an extruder or feeding the mixed ingredients as a solid, semi-solid, or liquid to the extruder. In such an embodiment, the components of the handling film or the material of the handling film can be fed into an extruder at various different locations along the length of the extruder. Then, one or more screws of the extruder typically rotate and intermix and/or melt the ingredient of the handling film such that the handling film may be emitted as a film from the extruder.

The material of the handling film may be provided (e.g., extruded) as a layer and then stretched to produce a thin layer and achieve a desired thickness of the handling film. One exemplary technique for stretching the handling film includes extrusion of the handling film onto a conveyor belt with the conveyor belt traveling at a rate that is faster than the rate at which the handling film (i.e., the extrudate) leaves the extruder. Another technique may involve using a die (e.g., an extrusion die) that emits a layer of a desired thickness to be the handling film without subsequent stretching. Another technique involves extruding the material of the handling layer through a die as a layer. The layer the wraps around a moving roll or drum that is heated to a desired temperature. The speed of the turning roll is set to the appropriate level to draw down the material layer to the appropriate thickness. The temperature of the roll is set so as to solidify the material so it is non-tacky and can easily be wound onto a core or spool. This type of process for producing thin films is known to those skilled in the art as a "cast film" or as the "cast film process".

Once formed, the handling film may be applied to extruded tacky adhesive extrudates. The handling film may be layered upon a surface of the extruded tacky adhesive extrudates. For example, the handling film may be co-extruded with the tacky adhesive material and continuously layered upon the adhesive extrudates. But preferably, the handling layer is formed and rolled and then unrolled as it is applied to the tacky adhesive extrudates. The adhesive extrudates and the handling film may be cut to form composite adhesive articles (e.g., a strip or mass of adhesive material with a handling film disposed thereon). The composite adhesive articles may be also formed by pre-forming of the mass of adhesive material into multiple masses (e.g., strips) and layering a pre-formed (e.g. pre-cut and/or pre-sized) handling film to the masses. Still further, it is contemplated that the skilled artisan will be able to determine additional manners of forming parts within the scope of the present invention.

After application of the handling film to the adhesive extrudates, the adhesive material, the handling film, or both may be activated to cure (e.g., crosslink), expand (e.g., foam), or both. Such activation may occur before welding, after welding, or when a welding step is employed. When the composite adhesive article is a part of an automotive vehicle (e.g., body or frame components), the activation typically occurs during paint or coating processing steps (e.g., in an e-coat oven).

If the composite adhesive articles have been applied to a carrier member to form a baffle, a reinforcement member, a seal or the like, the carrier member with the parts thereon is typically inserted within a cavity of a structure of an article of manufacture (e.g., an automotive vehicle). After insertion, the adhesive extrudates, the handling film, or both are typically activated to expand, cure or both thereby adhering the carrier to the structure (e.g., within a cavity thereof) of the article for forming a baffling, sealing, or a reinforcement system. Alternatively, if the adhesive material or composite adhesive article has been applied to other members of an article of manufacture (e.g., members of an automotive vehicle) as discussed herein, the adhesive material or part may be activated to expand, cure or both and form a seal, a reinforcement, a baffle, a sound absorption system, the like, or a combination thereof.

FIG. 1 illustrates an example of a composite adhesive article **10** formed in accordance with the present teachings. As shown, the composite adhesive article **10** includes a handling film **12** that overlays a surface **14** of a tacky adhesive extrudate **16.**

The handling film of the teachings herein is such that when used with an adhesive as described herein, the lap shear strength of the adhesive is not significantly reduced as a result of the film. Test data shown at Fig. 2 shows lap shear test results of adhesive alone as compared with adhesive including the handling film. A 50kN load cell was sued for mechanical testing. Instron pneumatic grips were used to clamp the specimens in place. The lap shear specimens were tested at a rate of 0.5 inches per minute. Further, when tested, the use of the handling film does not reduce the amount of cohesive failure on any of the tested specimens and there may be no statistical difference between specimens with and without the handling film.

Unless stated otherwise, dimensions and geometries of the various structures depicted herein are not intended to be restrictive of the teachings, and other dimensions or geometries are possible. Plural structural components can be provided by a single integrated structure. Alternatively, a single integrated structure might be divided into separate plural components. In addition, while a feature of the present teachings may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present teachings.

## Claims

1. A handling film comprising:
a polyhydroxyamino ether thermoplastic;
a monofunctional epoxy;
a carboxylated nitrile butadiene elastomer;
wherein the monofunctional epoxy reacts with an amine of the polyhydroxyamino ether thermoplastic substantially limiting reaction between the carboxylated nitrile butadiene elastomer and polyhydroxyamino ether thermoplastic.

2. The handling film according to claim 1, including a nitrile butadiene rubber elastomer with a high bound acrylonitrile content.

3. The handling film according to claim 1 or 2, including an ethylene methyl acrylate copolymer.

4. The handling film according to any of the preceding claims, including a solid epoxy resin.

5. The handling film according to any of the preceding claims, wherein a thickness of the handling film is 25 microns or less.

6. The handling film according to any of the preceding claims, wherein a thickness of the handling film is 8 microns or less.

7. The handling film according to any of the preceding claims, wherein polyhydroxyamino ether thermoplastic is included in the handling film in an amount between 50 and 80 wt.-% of the total composition.

8. The handling film according to any of the preceding claims, wherein the monofunctional epoxy is an epoxidized cashew nutshell liquid.

9. The handling according to claim 8, wherein the epoxidized cashew nutshell liquid is included in the handling film in an amount between 5 and 25 wt.-% of the total composition.

10. The handling film according to any of the preceding claims, wherein the carboxylated nitrile butadiene elastomer is included in the handling film in an amount between about 2 and 15 wt.-% of the total composition.

11. The handling film according to any of the preceding claims, which comprises 65-75 wt.-% polyhydroxyamino ether thermoplastic;
1-15 wt.-% monofunctional epoxy;
1-15 wt.-% ethylene methyl acrylate copolymer;
1-15 wt.-% solid epoxy resin;
1-15 wt.-% a carboxylated nitrile butadiene elastomer;
1-10 wt.-% an nitrile butadiene rubber elastomer with a high bound acrylonitrile content; and
0.1-5 wt.-% precipitated silica.

12. The handling film according to any of the preceding claims, which comprises
from 65% to 75 wt.-% polyhydroxyamino ether thermoplastic,
from 5% to 15 wt.-% epoxidized cashew nut shell liquid,
from 1% to 10 wt.-% ethylene methyl acrylate copolymer,
from 5% to 15 wt.-% solid epoxy resin,
from 1% to 10 wt.-% carboxylated nitrile butadiene elastomer,
from 1% to 5 wt.-% nitrile butadiene rubber elastomer with a high bound acrylonitrile content, and
from 0.5% to 3 wt.-% precipitated silica.

13. A composite adhesive article comprising:
(a) an adhesive; and
(b) a handling film comprising:
a. a polyhydroxyamino ether thermoplastic;
b. a monofunctional epoxy;
c. an ethylene methyl acrylate copolymer;
d. solid epoxy resin;
e. a carboxylated nitrile butadiene elastomer;
f. a nitrile butadiene rubber elastomer with a high bound acrylonitrile content; and
g. a filler.

14. The composite adhesive article according to claim 13, wherein the monofunctional epoxy is an epoxidized cashew nut shell liquid.

15. The composite adhesive article according to claim 13 or 14, wherein the adhesive is a tacky structural adhesive.

## Patentansprüche

1. Manipulationsfolie, umfassend:
einen Polyhydroxyaminoether-Thermoplast;
ein monofunktionelles Epoxidharz;
ein carboxyliertes Nitril-Butadien-Elastomer;
wobei das monofunktionelle Epoxidharz mit einem Amin des Polyhydroxyaminoether-Thermoplasts reagiert, wodurch die Reaktion zwischen dem carboxylierten Nitril-Butadien-Elastomer und dem Polyhydroxyaminoether-Thermoplast erheblich einschränkt wird.

2. Manipulationsfolie nach Anspruch 1, die ein Nitril-Butadien-Kautschuk-Elastomer mit einem hohen Gehalt an gebundenem Acrylonitril enthält.

3. Manipulationsfolie nach Anspruch 1 oder 2, die ein Ethylen-Methylacrylat-Copolymer enthält.

4. Manipulationsfolie nach einem der vorstehenden Ansprüche, die ein festes Epoxidharz enthält.

5. Manipulationsfolie nach einem der vorstehenden Ansprüche, wobei eine Stärke der Manipulationsfolie 25 Mikrometer oder weiniger beträgt.

6. Manipulationsfolie nach einem der vorstehenden Ansprüche, wobei eine Stärke der Manipulationsfolie 8 Mikrometer oder weiniger beträgt.

7. Manipulationsfolie nach einem der vorstehenden Ansprüche, wobei Polyhydroxyaminoether-Thermoplast in der Manipulationsfolie in einer Menge zwischen 50 und 80 Gew.-% der Gesamtzusammensetzung enthalten ist.

8. Manipulationsfolie nach einem der vorstehenden Ansprüche, wobei das monofunktionelle Epoxidharz ein Cashew-Schalenöl ist.

9. Manipulationsfolie nach Anspruch 8, wobei das epoxidierte Cashew-Schalenöl in der Manipulationsfolie in einer Menge zwischen 5 und 25 Gew.-% der Gesamtzusammensetzung enthalten ist.

10. Manipulationsfolie nach einem der vorstehenden Ansprüche, wobei das carboxylierte Nitril-Butadien-Elastomer in der Manipulationsfolie in einer Menge zwischen etwa 2 und 15 Gew.-% der Gesamtzusammensetzung enthalten ist.

11. Manipulationsfolie nach einem der vorstehenden Ansprüche, umfassend
zu 65-75 Gew.-% Polyhydroxyaminoether-Thermoplast;
zu 1-15 Gew.-% monofunktionelles Epoxidharz;
zu 1-15 Gew.-% Ethylen-Methylacrylat-Copolymer;
zu 1-15 Gew.-% festes Epoxidharz;
zu 1-15 Gew.-% ein carboxyliertes Nitril-Butadien-Elastomer;
zu 1-10 Gew.-% ein Nitril-Butadien-Kautschuk-Elastomer mit einem hohen Gehalt an gebundenem Acrylonitril und zu 0,1-5 Gew.-% gefälltes Siliciumdioxid.

12. Manipulationsfolie nach einem der vorstehenden Ansprüche, umfassend
zu 65 Gew.-% bis 75 Gew.-% Polyhydroxyaminoether-Thermoplast,
zu 5 Gew.-% bis 15 Gew.-% epoxidiertes Cashew-Schalenöl,
zu 1 Gew.-% bis 10 Gew.-% Ethylen-Methylacrylat-Copolymer,
zu 5 Gew.-% bis 15 Gew.-% festes Epoxidharz,
zu 1 Gew.-% bis 10 Gew.-% carboxyliertes Nitril-Butadien-Elastomer,
zu 1 Gew.-% bis 5 Gew.-% Nitril-Butadien-Kautschuk-Elastomer mit einem hohen Gehalt an gebundenem Acrylonitril und
zu 0,5 Gew.-% bis 3 Gew.-% gefälltes Siliciumdioxid.

13. Verbundklebeartikel, umfassend:
(a) einen Kleber; und
(b) eine Manipulationsfolie, umfassend:
a. einen Polyhydroxyaminoether-Thermoplast;
b. ein monofunktionelles Epoxidharz;
c. ein Ethylen-Methylacrylat-Copolymer;
d. ein festes Epoxidharz;
e. ein carboxyliertes Nitril-Butadien-Elastomer;
f. ein Nitril-Butadien-Kautschuk-Elastomer mit einem hohen Gehalt an gebundenem Acrylonitril und
g. einen Füllstoff.

14. Verbundklebeartikel nach Anspruch 13, wobei das monofunktionelle Epoxidharz ein epoxidiertes Cashew-Schalenöl ist.

15. Verbundklebeartikel nach Anspruch 13 oder 14, wobei der Kleber ein klebriger Strukturkleber ist.

## Revendications

1. Film de manipulation comprenant :
un thermoplastique de type polyhydroxyamino éther ;
un époxy monofonctionnel ;
un élastomère de nitrile butadiène carboxylé ;
l'époxy monofonctionnel réagissant avec une amine du thermoplastique de type polyhydroxyamino éther limitant sensiblement une réaction entre l'élastomère de nitrile butadiène carboxylé et le thermoplastique de type polyhydroxyamino éther.

2. Film de manipulation selon la revendication 1, comportant un élastomère de caoutchouc de nitrile butadiène doté d'une teneur élevée en acrylonitrile lié.

3. Film de manipulation selon la revendication 1 ou 2, comportant un copolymère d'éthylène-acrylate de méthyle.

4. Film de manipulation selon l'une quelconque des revendications précédentes, comportant une résine époxy solide.

5. Film de manipulation selon l'une quelconque des revendications précédentes, une épaisseur du film de manipulation étant de 25 microns ou moins.

6. Film de manipulation selon l'une quelconque des revendications précédentes, une épaisseur du film de manipulation étant de 8 microns ou moins.

7. Film de manipulation selon l'une quelconque des revendications précédentes, le thermoplastique de type polyhydroxyamino éther étant compris dans le film de manipulation en une quantité comprise entre 50 et 80 % en poids de la composition totale.

8. Film de manipulation selon l'une quelconque des revendications précédentes, l'époxy monofonctionnel étant un liquide de coque de noix de cajou époxydé.

9. Film de manipulation selon la revendication 8, le liquide de coque de noix de cajou époxydé étant compris dans le film de manipulation en une quantité comprise entre 5 et 25 % en poids de la composition totale.

10. Film de manipulation selon l'une quelconque des revendications précédentes, l'élastomère de nitrile butadiène carboxylé étant compris dans le film de manipulation en une quantité comprise entre environ 2 et 15 % en poids de la composition totale.

11. Film de manipulation selon l'une quelconque des revendications précédentes, qui comprend
65 à 75 % en poids de thermoplastique de type polyhydroxyamino éther ;
1 à 15 % en poids d'époxy monofonctionnel ;
1 à 15 % en poids de copolymère d'éthylène-acrylate de méthyle ;
1 à 15 % en poids de résine époxy solide ;
1 à 15 % en poids d'un élastomère de nitrile butadiène carboxylé ;
1 à 10 % en poids d'un élastomère de caoutchouc de nitrile butadiène doté d'une teneur élevée en acrylonitrile lié ; et
0,1 à 5 % en poids de silice précipitée.

12. Film de manipulation selon l'une quelconque des revendications précédentes, qui comprend
65 à 75 % en poids de thermoplastique de type polyhydroxyamino éther ;
5 à 15 % en poids de liquide de coque de noix de cajou époxydé ;
1 à 10 % en poids de copolymère d'éthylène-acrylate de méthyle ;
5 à 15 % en poids de résine époxy solide ;
1 à 10 % en poids d'élastomère de nitrile butadiène carboxylé ;
1 à 5 % en poids d'élastomère de caoutchouc de nitrile butadiène doté d'une teneur élevée en acrylonitrile lié, et
0,5 à 3 % en poids de silice précipitée.

13. Article adhésif composite comprenant :
(a) un adhésif ; et
(b) un film de manipulation comprenant :
a. un thermoplastique de type polyhydroxyamino éther ;
b. un époxy monofonctionnel ;
c. un copolymère d'éthylène-acrylate de méthyle ;
d. une résine époxy solide ;
e. un élastomère de nitrile butadiène carboxylé ;
f. un élastomère de caoutchouc de nitrile butadiène doté d'une teneur élevée en acrylonitrile lié ; et
g. une charge.

14. Article adhésif composite selon la revendication 13, l'époxy monofonctionnel étant un liquide de coque de noix de cajou époxydé.

15. Article adhésif composite selon la revendication 13 ou 14, l'adhésif étant un adhésif structural collant.
